# FASCICULE DE BREVET EUROPEEN

(11) **EP 1 778 524 B1**
(45) Date de publication et mention de la délivrance du brevet: **14.04.2010**
(21) Numéro de dépôt: 05769414.3
(22) Date de dépôt: 09.05.2005
(51) Int. Cl.: B60R 21/13

(54) **DISPOSITIF DE SECURITE EN CAS DE RETOURNEMENT DE VEHICULE**
SICHERHEITSVORRICHTUNG ZUR VERWENDUNG IM FALLE EINES FAHRZEUGÜBERSCHLAGS
SAFETY DEVICE FOR USE IN THE EVENT OF A VEHICLE ROLL OVER

(30) Priorité: 21.06.2004 FR 0451302; 21.06.2004 FR 0451303; 02.07.2004 FR 0451412
(43) Date de publication de la demande: 02.05.2007
(73) Titulaire: Heuliez, 79140 Cerizay (FR)
(72) Inventeur: QUEVEAU, Gérard, F-79140 Le Pin (FR); QUEVEAU, Paul, F-79140 Montravers (FR); GUILLEZ, Jean-Marc, F-79140 Cirières (FR)
(74) Mandataire: Novagraaf IP
(86) Numéro de dépôt international: PCT/FR2005/001146
(87) Numéro de publication internationale: WO 2006/008352

(56) Documents cités:
- EP-A- 0 411 448
- EP-A- 1 028 050
- WO-A-91/02669

## Description

La présente invention concerne un dispositif de sécurité en cas de retournement d'un véhicule et notamment un tel dispositif comprenant :
- au moins deux barres cintrées, chaque barre cintrée possédant une première et une deuxième extrémités, lesdites barres étant déplaçables en cas de retournement d'une position effacée vers une position déployée ;
- un système en précontrainte pour le déploiement de chaque barre ;
- un système de déclenchement activé en cas de retournement du véhicule ;
- au moins un organe de verrouillage qui maintient la précontrainte et qui se libère grâce au système de déclenchement libérant ainsi chaque barre de sa position effacée.

De tels dispositifs sont connus par exemple par les documents US-A-5205 585 et WO-A-91 /02669.

Dans ces documents, les systèmes de précontrainte, de verrouillage et de commande des barres cintrées de sécurité sont disposés derrière les dossiers des sièges à protéger de sorte qu'ils empiètent sur la longueur du compartiment à bagages sur sensiblement toute la hauteur de celui-ci.

On connaît par ailleurs des véhicules automobiles du type convertible en cabriolet dans lesquels le toit, réalisé en plusieurs parties, peut être soit au-dessus de l'habitacle en configuration couverte, soit rangé dans le compartiment à bagages en configuration cabriolet.

Dans ces derniers véhicules, il est essentiel de disposer d'un compartiment à bagages de longueur maximale pour le rangement des éléments de toit. Les dispositifs de sécurité de l'art antérieur ne sont donc pas satisfaisants de ce point de vue puisqu'ils conduisent à une réduction sensible de la longueur de rangement à l'intérieur du compartiment à bagages.

La présente invention vise à pallier ces inconvénients.

A cet effet, l'invention a tout d'abord pour objet un dispositif de sécurité en cas de retournement d'un véhicule, comprenant :
- au moins deux barres cintrées, chaque barre cintrée possédant une première et une deuxième extrémités, lesdites barres étant déplaçables en cas de retournement d'une position effacée vers une position déployée ;
- un système en précontrainte pour le déploiement de chaque barre ;
- un système de déclenchement activé en cas de retournement du véhicule ;
- au moins un organe de verrouillage qui maintient la précontrainte et qui se libère grâce au système de déclenchement libérant ainsi chaque barre de sa position effacée ;
la première extrémité de chaque barre étant articulée sur une platine centrale commune, de sorte que lesdites deux barres s'étendent chacune d'un côté de ladite platine, à partir de l'une des faces de ladite platine, et sensiblement symétriquement par rapport à un plan, le système en précontrainte, le système de déclenchement et l'organe de verrouillage de chaque barre étant prévu sur la même face de ladite platine, ladite articulation étant réalisée grâce à un palier comprenant une partie fixe solidaire de la platine et une partie mobile solidaire de la première extrémité de la barre, la platine étant destinée à être fixée sur un élément de structure du véhicule.

Les organes de contrainte, de verrouillage et de commande sont par conséquent groupés de façon très compacte sur une même platine de montage. Cette platine supporte également sur sa même face les paliers d'articulation des barres de sécurité. Il s'ensuit que les dispositifs de verrouillage et de commande et de précontrainte peuvent être disposés non pas entre le dossier et le compartiment à bagages, mais à la partie supérieure de ce dernier dont la longueur est par conséquent augmentée sur l'essentiel de sa hauteur.

Dans un mode de réalisation particulier, la partie mobile du palier ou l'extrémité des barres comprend un élément de forme qui coopère avec l'organe de verrouillage du système de verrouillage de manière :
- d'une part, à immobiliser les barres cintrées dans leur position effacée et en précontrainte par l'engagement de l'organe de verrouillage avec l'élément de forme ;
- d'autre part, à libérer les barres cintrées par désengagement de l'organe de verrouillage de l'élément de forme.

Egalement, dans un mode de réalisation particulier, la partie mobile du palier comprend un arbre solidaire de la première extrémité de la barre cintrée, ledit arbre étant articulé selon un axe de rotation sur la partie fixe du palier.

Plus particulièrement, l'élément de forme peut être une cavité ou une protubérance de l'arbre et l'organe de verrouillage est monté mobile sur la partie fixe du palier.

Egalement dans un mode de réalisation particulier, le système en précontrainte est disposé à l'intérieur de la partie fixe du palier et à proximité immédiate de la partie mobile du palier.

Plus particulièrement, le système en précontrainte peut être un ressort disposé autour de l'arbre, ledit ressort ayant une première extrémité reliée à la partie mobile du palier et une deuxième extrémité reliée à la partie fixe du palier.

Encore plus particulièrement, le ressort peut être un ressort de torsion.

Egalement dans un mode de réalisation particulier, la deuxième extrémité de chaque barre est adaptée pour qu'un système anti-retour disposé entre la deuxième extrémité de chaque barre et une partie de structure du véhicule empêche le retrait de la barre lorsque celle-ci se trouve en position déployée.

On observera qu'un tel agencement peut d'ailleurs être utilisé indépendamment des caractéristiques précédentes, dans le but de renforcer la rigidité des arceaux comme cela sera exposé ci-après.

Plus particulièrement, le système anti-retour peut être un système à cliquet.

Egalement dans un mode de réalisation particulier, les dispositifs de commande du verrouillage et de la libération de chaque barre sont actionnés par un actionneur commun.

Egalement dans un mode de réalisation particulier, les axes des paliers sont sensiblement parallèles.

L'invention a également pour objet un véhicule automobile comprenant au moins une rangée de sièges montés fixement sur le plancher, ledit véhicule étant équipé d'un ensemble de sécurité en cas de retournement, ledit ensemble comprenant :
- deux barres cintrées possédant chacune une première et une deuxième extrémité, lesdites barres étant déplaçables entre une position effacée et une position déployée en cas de retournement du véhicule, les premières extrémités desdites barres étant articulées à un support;
- un système en précontrainte pour le déploiement des barres ; et
- un système de verrouillage qui maintient les barres en précontraintes et qui se libère grâce un système de déclenchement ;
ledit véhicule comprenant un élément de structure du véhicule situé à l'arrière des sièges, ledit élément de structure s'étendant transversalement sensiblement horizontalement, et étant supporté latéralement à ses extrémités sur le châssis dudit véhicule, ledit élément de structure comprenant une partie inférieure située à une certaine hauteur au-dessus du plancher du véhicule, et une partie supérieure sur laquelle ledit support est monté fixement.

Ainsi, les articulations des barres sont montées au-dessus de l'élément de structure, sur un support qui peut également recevoir les systèmes de précontrainte, de verrouillage et de commande des barres cintrées de sécurité. L'élément de structure étant supporté latéralement, l'espace situé à l'avant du compartiment à bagages est laissé libre sur toute la hauteur entre le plancher et la partie inférieure de l'élément de structure.

Dans un mode de réalisation particulier, le véhicule possède un toit comprenant plusieurs éléments rétractables vers une position de rangement située à l'arrière des sièges, et un ou plusieurs desdits éléments de toit vient/viennent se loger en partie sous ledit élément de structure lorsqu'il/ils est/sont dans ladite position de rangement.

Egalement dans un mode de réalisation particulier, des systèmes anti-retour sont disposés entre des parties latérales de structure du véhicule et chacune des deuxièmes extrémités des barres, de sorte à empêcher le retrait des barres lorsqu'elles sont en position déployée.

Egalement dans un mode de réalisation particulier, le support est disposé dans un plan transversal du véhicule et les parties des barres partant desdites deuxièmes extrémités sont situées, dans leur position effacée, vers l'avant et à distance du plan transversal du véhicule dans lequel est disposé le support.

Egalement dans un mode de réalisation particulier, l'élément de structure sur lequel est monté fixement le support est une poutre.

Plus particulièrement, lesdites parties latérales de structure du véhicule peuvent être des caissons creux adaptés à recevoir intérieurement ladite partie des barres en position effacée ainsi que les systèmes anti-retour.

La poutre peut également posséder deux extrémités reliées aux dits caissons creux qui sont disposés de part et d'autre du châssis du véhicule.

Dans un mode de réalisation particulier, chaque système anti-retour comprend un dispositif de guidage destiné à guider les barres lors de leur déploiement.

Egalement dans un mode de réalisation particulier, les premières extrémités des barres cintrées sont articulées au support au voisinage l'une de l'autre et le système en précontrainte, le système de verrouillage et le système de déclenchement sont intégrés au support, formant ainsi une unité de support assurant l'articulation des barres, leur verrouillage, la précontrainte et leur déploiement.

Plus particulièrement, le système de verrouillage et le système de déclenchement peuvent être communs à l'ensemble des barres.

L'invention a également pour objet un ensemble de sécurité destiné à équiper un véhicule tel que décrit ci-dessus, ledit véhicule comprenant :
- deux barres cintrées possédant chacune une première et une deuxième extrémité, lesdites barres étant déplaçables entre une position effacée et une position déployée en cas de retournement du véhicule, les premières extrémités desdites barres étant articulées sur un support ;
- un système en précontrainte pour le déploiement des barres ;
- un système de verrouillage qui maintient les barres en précontrainte et qui se libère grâce un système de déclenchement ;
- chacune des parties de barre cintrée partant des deuxièmes extrémités étant insérée dans un guide, destiné à guider les barres lors de leur déploiement, le guide portant un système anti-retour ;
- le support étant relié par l'intermédiaire des barres cintrées aux guides dont les systèmes anti-retour sont verrouillés, l'ensemble formant ainsi un module pré-assemblé.

Dans un mode de réalisation particulier, des éléments de liaison relient l'unité support aux guides.

L'invention a également pour objet un procédé d'assemblage d'un ensemble de sécurité tel que décrit ci-dessus consistant à :
- installer les systèmes en précontrainte, le système de verrouillage et le système de déclenchement sur ledit support pour former l'unité de support;
- installer les premières extrémités des barres dans les articulations de l'unité de support et placer les barres dans leur position déployée ;
- relier les deuxièmes extrémités des barres aux guides par verrouillage des systèmes anti-retour ;
- présenter le module précédemment assemblé au dessus dudit élément de structure du véhicule et positionner les guides au dessus des parties latérales de structure ;
- abaisser le module pré-assemblé en insérant les guides dans les parties latérales de structuré ;
- fixer l'unité de support sur l'élément de structure et les guides aux parties latérales de structure ;
- libérer le système de verrouillage ;
- pivoter les barres de la position déployée vers la position effacée, les deux extrémités étant guidées par les guides, et ;
- verrouiller le système de verrouillage.

Dans un mode de mise en oeuvre particulier, lors du pré-assemblage de l'ensemble de sécurité, on relie l'unité de support et les guides par des éléments de liaison.

On décrira maintenant à titre d'exemples non limitatifs un mode de réalisation particulier de l'invention en référence aux dessins schématiques annexés dans lesquels :
- la figure 1 est une vue en perspective d'un ensemble d'arceaux de sécurité pour véhicules automobiles ;
- la figure 2 en est une vue de face en position effacée ;
- la figure 3 en est une vue de face en position déployée ;
- la figure 4 est une vue de dessus en coupe selon la ligne IV-IV de la figure 5 de l'ensemble de commande des arceaux ;
- la figure 5 est une vue en coupe selon la ligne V-V de la figure 4 ;
- la figure 6 est une vue en coupe selon la ligne VI-VI de la figure 4 ;
- la figure 7 est une vue en coupe selon la ligne VII-VII de la figure 4 ;
- la figure 8 est une vue en coupe longitudinale de l'arrière d'un véhicule équipé des arceaux des figures précédentes ; et
- la figure 9 illustre les avantages de l'invention par rapport à l'art antérieur.
- la figure 10 est une vue en coupe de l'ensemble de commande des arceaux selon un second mode de réalisation de l'invention;
- la figure 11 est une vue en coupe selon la ligne VIII-VIII de la figure 10 ;
- la figure 12 est une vue en coupe de l'ensemble de commande des arceaux selon un troisième mode de réalisation.
- la figure 13 est une vue en coupe selon la ligne IX-IX de la figure 12 ;
- la figure 14 est une vue de face de l'ensemble de commande selon un quatrième mode de réalisation.

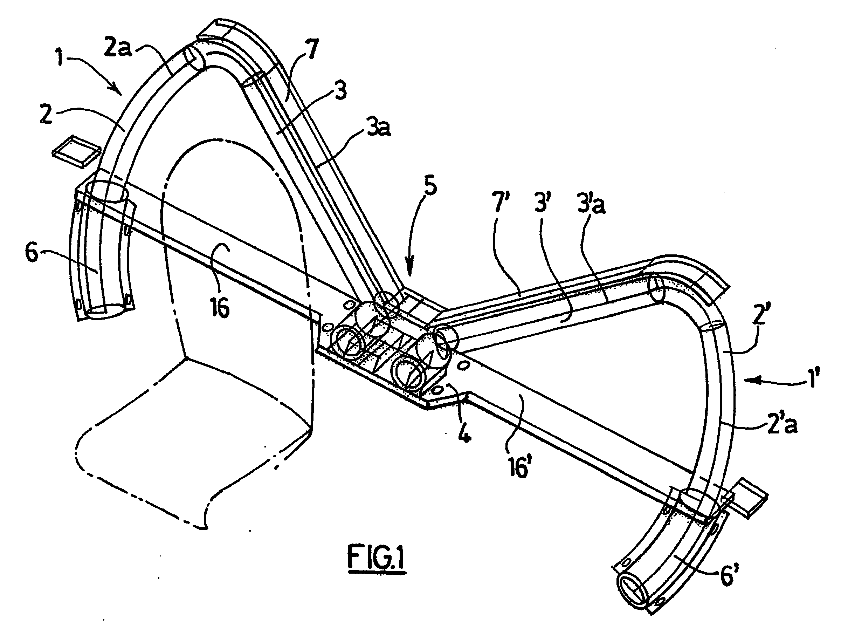

On voit à la figure 1 deux arceaux de sécurité 1 et 1' constitués chacun d'une barre cintrée, ou tube coudé, formant deux branches 2, 3, respectivement 2', 3'. Les axes 2a et 2'a des bras 2 et 2' des arceaux ont une forme généralement circulaire tandis que les axes 3a et 3'a des bras 3 et 3' sont sensiblement rectilignes.

Les arceaux 1 et 1' sont articulés symétriquement le long de deux bords latéraux opposés d'une face d'une platine 4. Les deux arceaux étant symétriques, on ne décrira maintenant plus que l'arceau 1 et ce qui le concerne.

Le bras 3 de l'arceau 1 a son extrémité libre articulée en 5 sur la platine 4 pour pivoter dans son plan par rapport à cette platine. L'extrémité libre du bras 2 est engagée dans un tube de guidage 6, qui peut être de forme complémentaire à celle du bras 2, pour guider l'arceau 1 lorsqu'il pivote autour de l'articulation 5.

La branche 3 de l'arceau 1 reçoit une garniture 7 permettant de cacher l'arceau lorsqu'il est en position effacée.

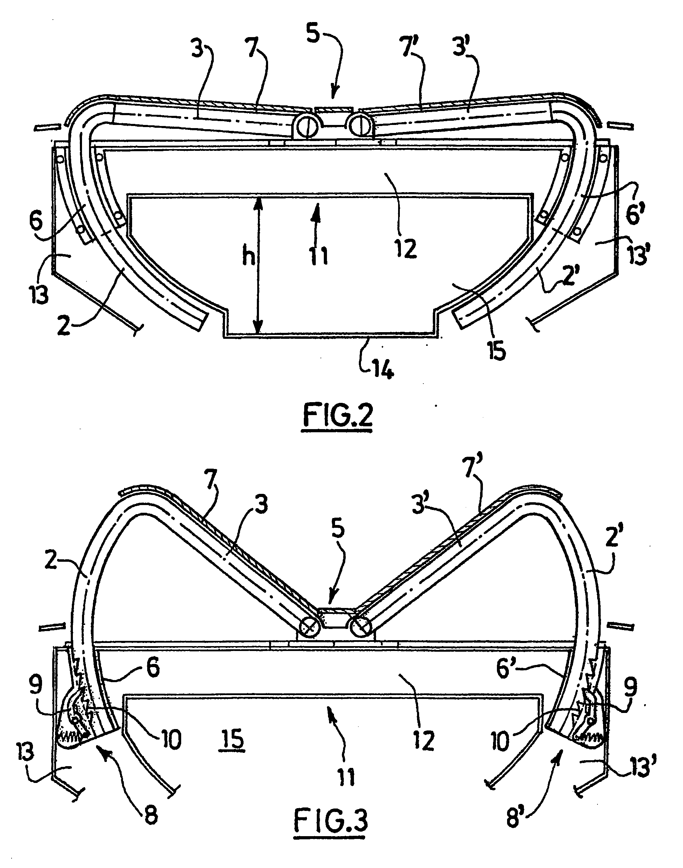

On voit aux figures 2 et 3 les arceaux en position respectivement effacée et déployée. La figure 3 représente en outre les dispositifs de verrouillage des arceaux en position déployée, ce dispositif n'étant pas représenté sur les autres figures.

Ces dispositifs comprennent un mécanisme 8 comportant un cliquet 9 coopérant avec des dents 10 formées à l'extrémité libre de la branche 2 de l'arceau. Lorsque ce dernier arrive en position déployée, le cliquet 9 coopère avec les dents 10 pour empêcher l'arceau de revenir en position effacée. On remarquera que ce dispositif de verrouillage, situé latéralement et coopérant avec l'extrémité libre de la branche 2 de l'arceau donne à ce dernier une grande rigidité puisqu'en position déployée, il est maintenu à ses deux extrémités.

Egalement pour donner un maximum de rigidité à l'arceau de sécurité, le guide 6 est monté solidaire de la structure 11 du véhicule 1. Cette structure est composée d'un élément de structure 12 transversal et sensiblement horizontal porté à chacune de ses extrémités latérales par un caisson de structure 13, 13'. La partie inférieure de la poutre 12 se trouve à une certaine hauteur h du plancher 14 du compartiment à bagages 15 du véhicule.

La platine 4 peut être reliée aux guides 6, 6' par des éléments de liaison 16, 16'. La platine 4 est elle-même montée sur la partie supérieure de la poutre 12. On obtient ainsi un ensemble de grande rigidité.

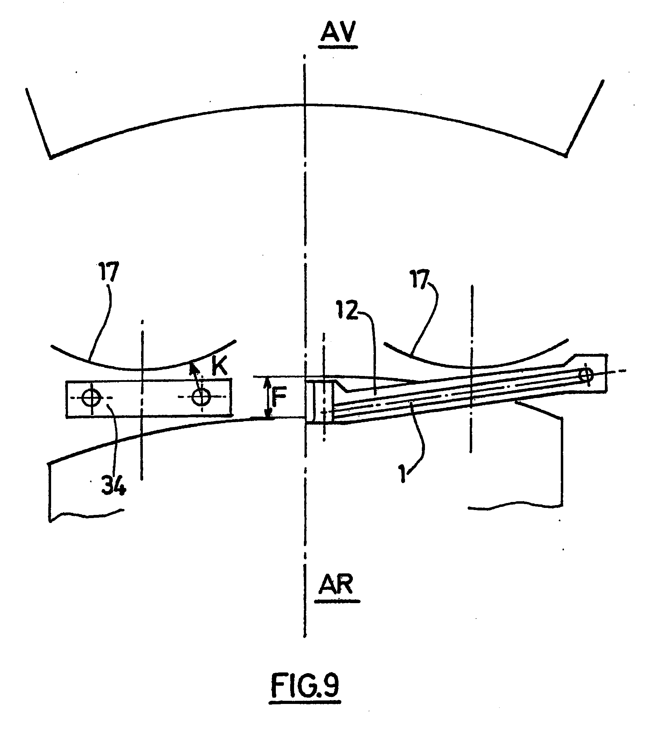

Comme on le voit à la figure 9, la poutre 12 se trouve en arrière des dossiers 17 des sièges du véhicule. Cette poutre est ici légèrement inclinée vers l'avant et l'extérieur de manière à mieux envelopper le dossier du siège, et à dégager davantage l'espace situé en dessous de la poutre.

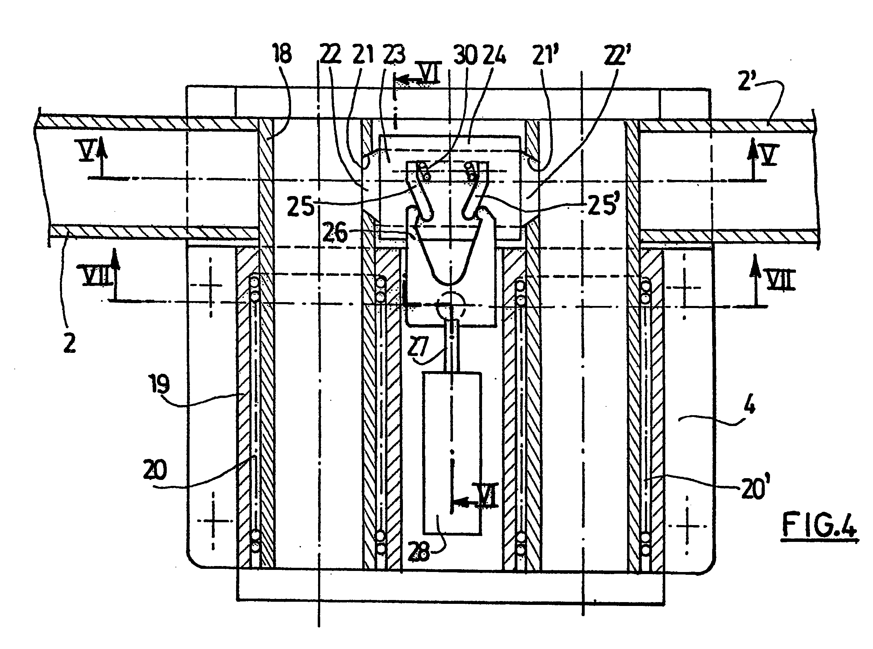

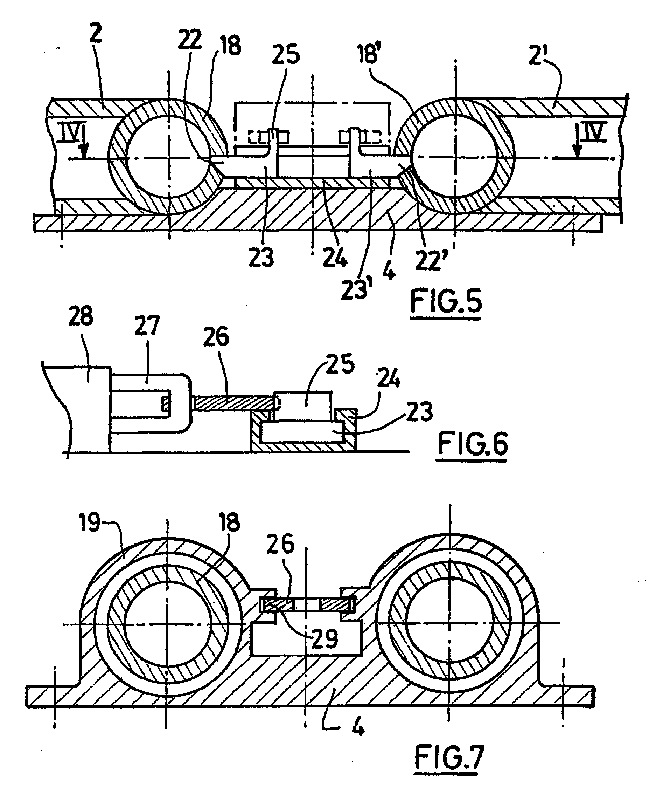

On se référera maintenant aux figures 4 à 7 qui illustrent les organes de commande des arceaux de sécurité.

L'extrémité libre de la branche 2 de l'arceau 1 est fixée à un tube 18 engagé dans une partie tubulaire 19 de la platine 4. Un ressort de précontrainte 20 est disposé entre le tube 18 et la partie tubulaire 19, une de ses extrémités étant fixée au tube 18 et son autre extrémité étant fixée à la partie tubulaire 19. Le ressort est précontraint lorsque l'arceau est dans sa position effacée.

L'extrémité du tube 18 qui dépasse de la partie tubulaire 19 comporte une encoche 21, à l'intérieur de laquelle est susceptible de s'engager un doigt de verrouillage 22 pour maintenir l'arceau en position effacée.

Le doigt de verrouillage 22 fait partie d'une pièce de commande 23 engagée dans une pièce de guidage 24 solidaire de la platine 4. Une came de commande 25 s'étend à partir de la pièce 23 sensiblement perpendiculairement à la platine 4.

La came de commande 25 est agencée pour coopérer avec une fourchette de commande de verrouillage 26 montée à l'extrémité libre d'une tige 27 en U d'un vérin de commande 28. La fourchette de verrouillage 26 est guidée par des rainures 29 formées dans la paroi extérieure des parties tubulaires 19.

Enfin, un ressort 30 rappelle les pièces de verrouillage 23, 23' contre l'action de la fourchette de verrouillage 26.

Lorsque les arceaux doivent être déployés, le vérin 28 pousse la fourchette de verrouillage 26 de sorte que les cames 25, 25' provoquent le coulissement des pièces 23, 23' dans la pièce de guidage 24. Il s'ensuit que les doigts de verrouillage 22, 22' sortent de l'encoche 21 et que les ressorts 20, 20' provoquent la rotation des arceaux et par conséquent leur déploiement.

L'ensemble de commande qui vient d'être décrit présente l'avantage d'être très compact. Le verrouillage est réalisé directement entre le tube 18 et la partie tubulaire 19 formant palier. En outre le ressort de précontrainte 20 est disposé dans le palier.

D'autre part, la platine 4 supporte les deux paliers de sorte que l'on peut utiliser un seul vérin 28, ce qui a pour avantage de faire baisser le coût de l'ensemble. La platine 4, ou unité de support, intègre en outre les fonctions de précontrainte, de verrouillage et de déclenchement.

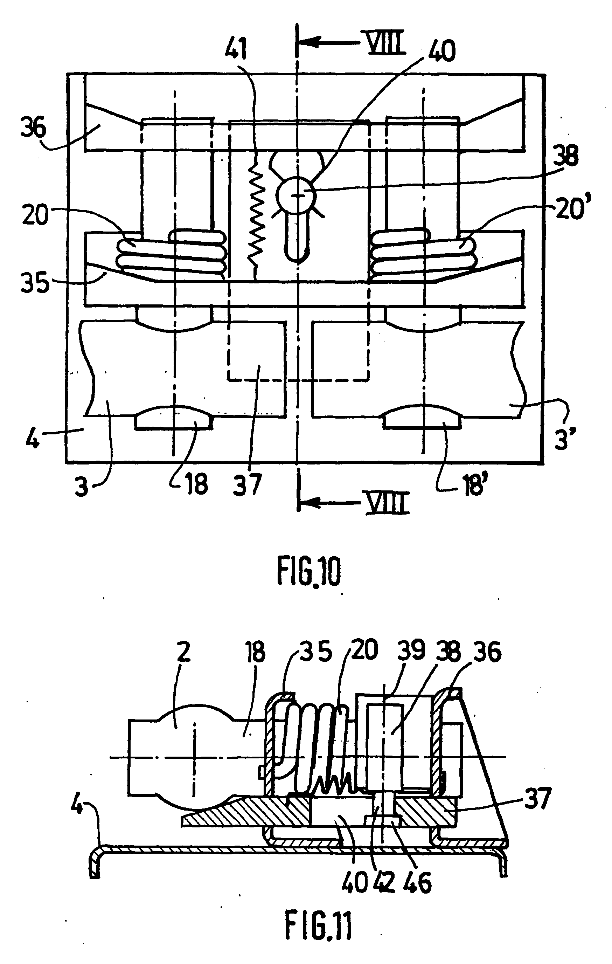

Dans le mode de réalisation représenté sur les figures 10 à 13, la partie fixe du palier est composée de deux plaques rigides 35, 36 sensiblement parallèles et fixées à la platine, lesdites plaques 35, 36 sont agencées pour recevoir le tube 18, 18' sur lequel est fixée la branche 3 de l'arceau. Un ressort de précontrainte 20 est disposé entre le tube 18, 18' et la première plaque 35.

L'organe de verrouillage, représenté sur les figures 10 et 11, est une plaque rigide 37 disposée contre les extrémités des branches 3, 3' et permettant ainsi de verrouiller la rotation des arceaux. La plaque rigide 37 est montée coulissante dans la partie fixe du palier 35, 36 et un ressort de rappel 41 fixé entre la seconde plaque rigide 36 du palier et l'organe de verrouillage 22 permet le mouvement de la plaque rigide 37.

L'actionneur 38, représenté sur les figures 10 et 11, est du type percuteur à explosif. L'actionneur 38 est fixé sur un support 39 solidarisé au palier.

La plaque rigide 37 possède une rainure 40 agencée pour recevoir la tête du percuteur 38. Lorsque le percuteur 38 n'est pas actionné, la tête 46 du percuteur est immobilisée dans la rainure 40. Ainsi, la plaque rigide 37 est immobile. Lorsque le percuteur est actionné, la tête 46 se désengage de la rainure 40 et la tige 42 du percuteur est mobile dans la rainure 40 de façon à permettre le mouvement de la plaque 37, vers la seconde plaque 36 du palier. Ainsi, la plaque 37 formant l'organe de verrouillage n'est plus en contact avec les branches 3 des arceaux et les ressorts 20, 20' provoquent la rotation des arceaux.

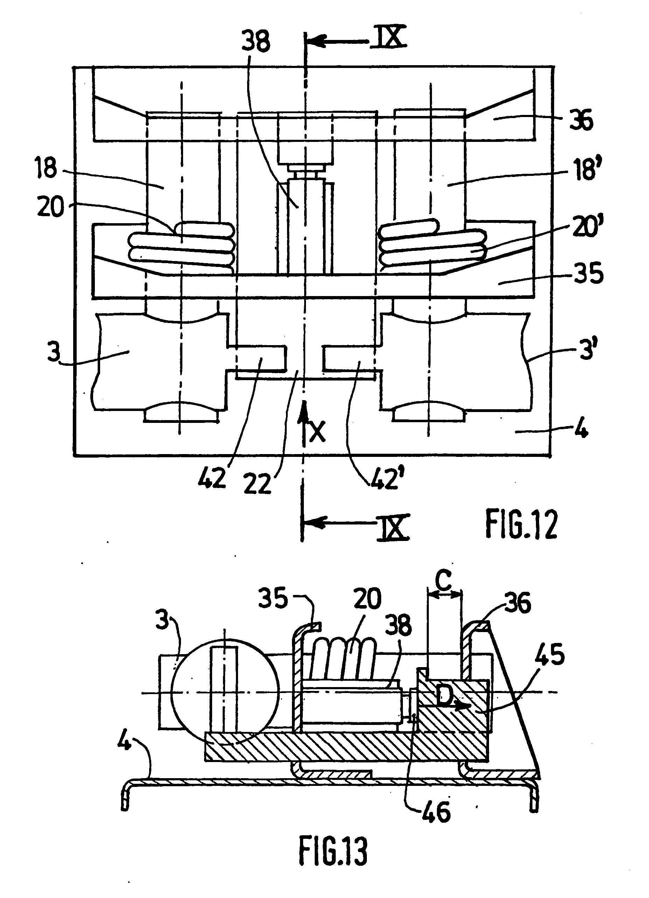

Dans le mode de réalisation représenté sur les figures 12 et 13, les extrémités des branches 3 des arceaux possèdent des ergots 42, 42'. Lorsque les arceaux sont dans leur position effacée, les ergots 42, 42' coopèrent avec l'organe de verrouillage 22 de façon à interdire leur déploiement.

L'organe de verrouillage 22 est monté coulissant dans la partie fixe du palier 35, 36 et possède une partie coudée qui coopère avec l'actionneur 38 disposé longitudinalement au véhicule.

Lorsque le percuteur 38 est actionné, la tête 46 du percuteur pousse la partie coudée 45 de l'organe de verrouillage 22 et celui-ci coulisse dans le palier selon la direction D. Ainsi, les ergots 42, 42' ne coopèrent plus avec l'organe de verrouillage et les arceaux se déploient. La course de la tête 46 est indiquée C sur la figure 13. La partie coudée 45 possède une butée afin de stopper le mouvement de l'organe de verrouillage 22 dans le palier.

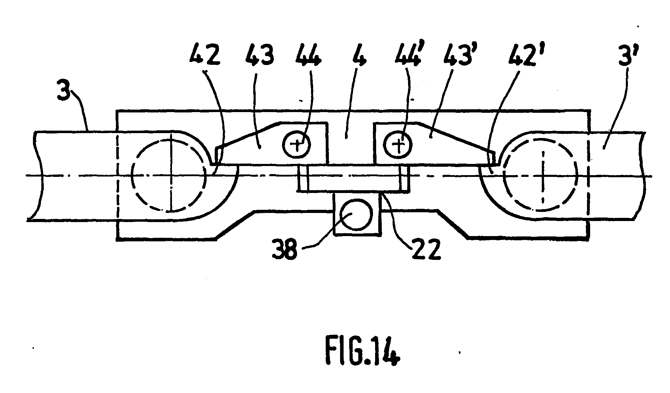

Dans le mode de réalisation de la figure 14, les extrémités des branches 3 possèdent également des ergots 42, 42'. La platine 4 est pourvue de bascules 43, 43' mobiles en rotation autour d'axes 44, 44' sensiblement parallèles aux axes de rotation des arceaux. Les bascules 43, 43' sont placées entre l'organe de verrouillage 22 et les ergots 42, 42'. Ainsi, les bascules 43, 43' sont immobilisées.

L'organe de verrouillage 22 est identique à l'organe de verrouillage de la figure 13. Ainsi, lorsque le percuteur 38 est actionné, l'organe de verrouillage coulisse dans le palier et les bascules 43, 43' sont libres en rotation afin de permettre le déploiement des arceaux.

Notons que dans les modes de réalisation représentés sur les figures 10 à 14, la platine peut être constituée par une partie de structure du véhicule.

Le dispositif comprenant les arceaux et ses moyens de fixation présente une bonne résistance aux efforts en cas de retournement. En effet, les efforts sont absorbés essentiellement en compression par les branches 2 et 3 des arceaux, ces branches les retransmettant sur des parties de structure rigide du véhicule par l'intermédiaire des paliers et des systèmes de verrouillage anti-retour 8.

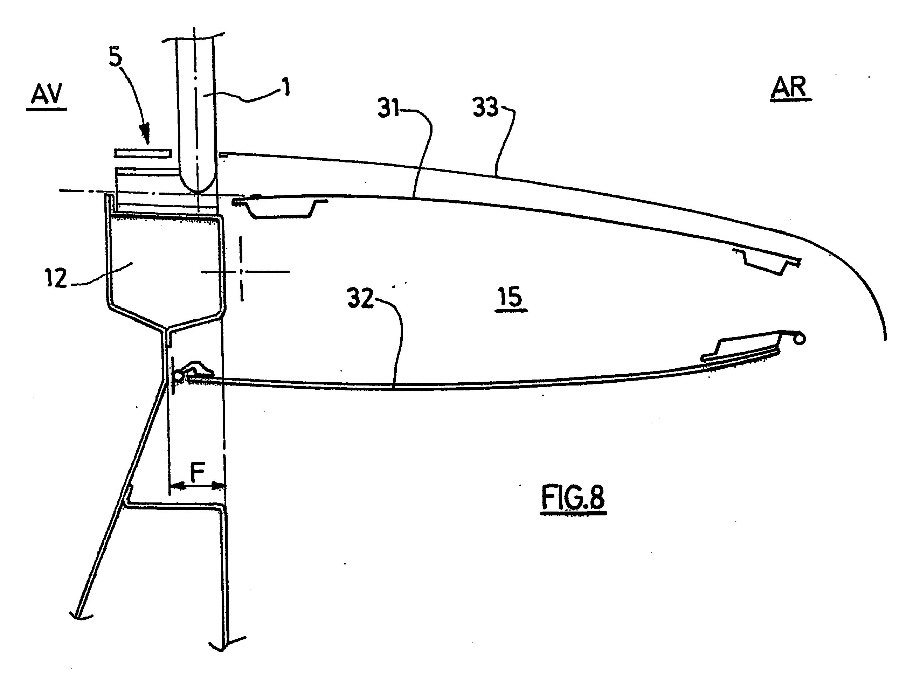

On voit à la figure 8, la partie arrière d'un véhicule muni des arceaux de sécurité selon l'invention. Ce véhicule est du type convertible en cabriolet dans lequel les éléments de toit 31 et 32 sont rangés dans le compartiment à bagages 15 sous le couvercle 33 de ce compartiment. On comprend qu'il est essentiel de disposer d'une longueur maximale à l'intérieur du compartiment 15.

On voit sur la figure 9 que les dispositifs de commande d'arceaux de sécurité de l'art antérieur nécessitaient un boîtier de commande de guidage 34 obligatoirement disposé à l'arrière du dossier 17 du siège et s'étendant sur une hauteur importante. Dans l'invention au contraire, la poutre 12 supporte l'ensemble des organes de guidage et de verrouillage 5 à sa partie supérieure. Il en résulte immédiatement en dessous de la poutre 12, et sur une hauteur h, un supplément F de longueur du compartiment 15.

On peut donc, au choix, soit prévoir des éléments de toit plus longs d'où un allongement de l'habitacle et donc plus de confort notamment pour les passagers arrière, soit à longueur de toit constante, réduire la longueur du coffre et par conséquent augmenter la longueur de l'habitacle ou offrir un coffre plus long que les toits et libérer ainsi de l'espace de rangement notamment à l'arrière du coffre.

## Revendications

1. Dispositif de sécurité en cas de retournement d'un véhicule, comprenant :
- au moins deux barres cintrées (1, 1'), chaque barre cintrée possédant une première et une deuxième extrémité, lesdites barres étant déplaçables en cas de retournement d'une position effacée vers une position déployée ;
- un système en précontrainte pour le déploiement de chaque barre ;
- un système de déclenchement activé en cas de retournement du véhicule ;
- au moins un organe de verrouillage (22, 22') qui maintient la précontrainte et qui se libère grâce au système de déclenchement libérant ainsi chaque barre de sa position effacée;
ledit dispositif étant **caractérisé en ce que** la première extrémité de chaque barre (1, 1') est articulée sur une platine centrale commune (4), de sorte que lesdites deux barres (1, 1') s'étendent chacune d'un côté de ladite platine, à partir de l'une des faces de ladite platine, et sensiblement symétriquement par rapport à un plan, un dispositif de commande du verrouillage et de la libération de chaque barre (1, 1') étant prévu sur la même face de ladite platine (4), ladite articulation étant réalisée grâce à un palier comprenant une partie fixe solidaire de la platine et une partie mobile solidaire de la première extrémité de la barre, la platine (4) étant destinée à être fixée sur un élément de structure du véhicule.

2. Dispositif de sécurité selon la revendication 1, **caractérisé en ce que** la partie mobile du palier ou l'extrémité des barres (3, 3') comprend un élément de forme (21, 42) qui coopère avec l'organe de verrouillage (22, 22') du système de verrouillage de manière :
- d'une part à immobiliser les barres cintrées (1, 1') dans leur position effacée et en précontrainte par engagement de l'organe de verrouillage avec l'élément de forme,
- d'autre part, à libérer les barres cintrées par désengagement de l'organe de verrouillage de l'élément de forme.

3. Dispositif de sécurité selon la revendication 1 ou 2, **caractérisé en ce que** la partie mobile du palier comprend un arbre (18, 18')) solidaire de la première extrémité de la barre cintrée (1, 1'), ledit arbre étant articulé selon un axe de rotation sur la partie fixe du palier.

4. Dispositif de sécurité selon la revendication 3, **caractérisé en ce que** l'élément de forme (21) est une cavité ou une protubérance de l'arbre (18, 18').

5. Dispositif de sécurité selon l'une des revendications 1 à 3, **caractérisé en ce que** l'élément de forme est constitué d'ergots (42, 42') disposés sur les premières extrémités des barres (1, 1') et coopérant avec l'organe de verrouillage (22).

6. Dispositif de sécurité selon la revendication 5, **caractérisé en ce que** les ergots (42) coopèrent avec l'organe de verrouillage (22) au moyen de bascules (43, 43') montés pivotantes sur la platine (4).

7. Dispositif de sécurité selon l'une des revendications 1 à 6, **caractérisé en ce que** l'organe de verrouillage (22) est monté mobile sur la partie fixe du palier.

8. Dispositif de sécurité selon la revendication 7, **caractérisé en ce qu'**un organe de verrouillage (22) commun permet d'immobiliser les barres cintrées (1,1') dans leur position effacée.

9. Dispositif de sécurité selon l'une quelconque des revendications 1 à 8, **caractérisé en ce que** le système en précontrainte est disposé à l'intérieur de la partie fixe du palier et à proximité immédiate de la partie mobile du palier.

10. Dispositif de sécurité selon la revendication 9, **caractérisé en ce que** le système en précontrainte est un ressort (20, 20') disposé autour de l'arbre, ledit ressort ayant une première extrémité reliée à la partie mobile du palier et une deuxième extrémité reliée à la partie fixe du palier.

11. Dispositif de sécurité selon la revendication 10, **caractérisé en ce que** le ressort est un ressort de torsion.

12. Dispositif de sécurité selon l'une quelconque des revendications 1 à 11 **caractérisé en ce que** les axes des paliers sont sensiblement parallèles.

13. Dispositif de sécurité selon l'une quelconque des revendications 1 à 12 **caractérisé en ce qu'**il comprend au moins deux systèmes anti-retour disposés chacun entre la deuxième extrémité de chaque barre et une partie de structure du véhicule pour empêcher le retrait de la barre lorsque celle-ci se trouve en position déployée.

14. Dispositif de sécurité selon la revendication 13, **caractérisé en ce que** chaque système anti-retour est un système à cliquet.

15. Dispositif selon la revendication 14, **caractérisé en ce que** chaque système à cliquet (9) est agencé pour coopérer avec des dents (10) formées sur la deuxième extrémité de la barre correspondante.

16. Véhicule automobile comprenant au moins une rangée de sièges montés fixement sur le plancher, ledit véhicule étant équipé d'un ensemble de sécurité en cas de retournement, ledit ensemble comprenant :
- deux barres cintrées (1, 1') possédant chacune une première et une deuxième extrémité, lesdites barres étant déplaçables entre une position effacée et une position déployée en cas de retournement du véhicule, les premières extrémités desdites barres étant articulées à une platine ;
- un système en précontrainte pour le déploiement des barres ; et
- un système de verrouillage qui maintient les barres en précontrainte et qui se libère grâce un système de déclenchement ;
**caractérisé en ce qu'**il comprend un élément de structure du véhicule situé à l'arrière des sièges, ledit élément de structure (12) s'étendant transversalement sensiblement horizontalement, et étant supporté latéralement à ses extrémités sur le châssis (11) dudit véhicule, ledit élément de structure comprenant une partie inférieure située à une certaine hauteur (h) au-dessus du plancher (14) du véhicule, et une partie supérieure sur laquelle ladite platine est montée fixement.

17. Véhicule selon la revendication 16 **caractérisé en ce que** le support est disposé dans un plan transversal du véhicule **caractérisé en ce que** les parties des barres partant desdites deuxièmes extrémités sont situées, dans leur position effacée, vers l'avant et à distance du plan transversal du véhicule dans lequel est disposée la platine.

18. Véhicule selon la revendication 16 ou 17, **caractérisé en ce que** l'élément de structure (12) sur lequel est montée fixement la platine est une poutre.

19. Véhicule selon l'une quelconque des revendications 16 à 18, **caractérisé en ce que** la platine (4) est constituée par l'élément de structure (12) du véhicule.

20. Véhicule selon l'une quelconque des revendications 18 et 19 **caractérisé en ce que** lesdites parties latérales de structure du véhicule sont des caissons creux (13, 13') adaptés à recevoir intérieurement ladite partie des barres en position effacée ainsi que les systèmes anti-retour (8).

21. Véhicule selon les revendications 19 et 20, **caractérisé en ce que** la poutre possède deux extrémités reliées aux dits caissons creux qui sont disposés de part et d'autre du châssis (11) du véhicule.

22. Véhicule selon l'une quelconque des revendications 17 à 21, **caractérisé en ce que** chaque système anti-retour (8) comprend un dispositif de guidage destiné à guider les barres(1, 1') lors de leur déploiement

23. Ensemble de sécurité destiné à équiper un véhicule selon l'une des revendications 17 à 22 **caractérisé en ce qu'**il comprend :
- deux barres cintrées (1, 1') possédant chacune une première et une deuxième extrémité, lesdites barres étant déplaçables entre une position effacée et une position déployée en cas de retournement du véhicule, les premières extrémités desdites barres étant articulées sur une platine;
- un système en précontrainte pour le déploiement des barres ;
- un système de verrouillage qui maintient les barres en précontrainte et qui se libère grâce un système de déclenchement ;
- chacune des parties de barre cintrée partant des deuxièmes extrémités étant insérée dans un guide (6, 6'), destiné à guider les barres lors de leur déploiement, le guide portant un système anti-retour (8) ;
- la platine étant reliée par l'intermédiaire des barres cintrées aux guides, dont les systèmes anti-retour sont verrouillés, l'ensemble formant ainsi un module pré-assemblé.

24. Ensemble de sécurité selon la revendication 23 **caractérisé en ce que** des éléments de liaison (16, 16') relient la platine (4) aux guides (6, 6').

25. Procédé d'assemblage d'un ensemble de sécurité selon la revendication 23 ou 24 sur un véhicule selon l'une des revendications 17 à 22 consistant à :
- installer les systèmes en précontrainte, le système de verrouillage et le système de déclenchement sur ledit support pour former l'unité de support (4);
- installer les premières extrémités des barres (1, 1') dans les articulations de l'unité de support et placer les barres (1, 1') dans leur position déployée ;
- relier les deuxièmes extrémités des barres (1, 1') aux guides (6, 6') par verrouillage des systèmes anti-retour (8) ;
- présenter le module précédemment assemblé au dessus dudit élément de structure (12) du véhicule et positionner les guides (6, 6') au dessus des parties latérales (13, 13') de structure ;
- abaisser le module pré-assemblé en insérant les guides (6, 6') dans les parties latérales de structure (13, 13') ;
- fixer l'unité de support sur l'élément de structure et les guides aux parties latérales de structure ;
- libérer le système de verrouillage ;
- pivoter les barres (1, 1') de la position déployée vers la position effacée, les deux extrémités étant guidées par les guides, et ;
- verrouiller le système de verrouillage.

26. Procédé d'assemblage suivant la revendication 25 **caractérisé en ce que**, lors du pré-assemblage de l'ensemble de sécurité, on relie l'unité de support (4) et les guides (6, 6') par des éléments de liaison (16, 16').

## Claims

1. A safety device in case of overturning of a vehicle, including:
- at least two bent bars (1, 1'), with each bent bar having a first and a second end, said bars being movable in case of overturning from a folded position to an unfolded position;
- a pre-stressed system for the unfolding of each bar;
- a triggering system activated in case of overturning of the vehicle;
- at least one locking member (22, 22') which maintains the pre-stress and which is released using the release system thus releasing each bar from the folded position thereof;
said device being **characterized in that** the first end of each bar (1,1') is articulated on a common central mounting plate (4) so that said two bars (1,1') extend each on one side of said mounting plate, from one of the faces of said mounting plate and substantially symmetrically with respect to a plane, a device controlling the locking and releasing of each bar (1, 1') being provided on the same face of said mounting plate (4), said articulation being provided through a bearing including a fixed part integral with the mounting plate and a movable cart integral, with the first end of the bar, the mounting plate (4) being intended to be fixed on a structure element of the vehicle.

2. The safety device according to claim 1 **characterized in that** a movable part of the bearing or the end of the bars (3, 3') includes a shape element (21, 42) which cooperates with the locking member (22, 22') of the locking system so as to:
- on the one hand, immobilize the bent bars (1, 1') in their folded position and stressed by the locking member engaging the shape element,
- on the other hand, to release the bent bars by the locking member disengaging the shape element.

3. A safety device according to claim 1 or 2 **characterized in that** the movable part of the bearing includes a shaft (18,18') integral with the first end of the bent bar (1, 1'), with said shaft being articulated along a rotation axis on the fixed part of the bearing.

4. A safety device according to claim 3, **characterized in that** the shape element (21) is a cavity or a protrusion of the shaft (18, 18').

5. A safety device according to one of claims 1 to 3, **characterized in that** the shape element is composed of pins (42, 42') positioned on the first ends of the bars (1, 1') and cooperating with the locking member (22).

6. A safety device according to claim 5, **characterized in that** the pins (42) cooperate with the locking member (22) using levers (43, 43') mounted to rotate on the mounting plate (4).

7. A safety device according to one of claims 1 to 6, **characterized in that** the locking member (22) is mounted to move on the fixed part of the bearing.

8. A safety device according to claim 7, **characterized in that** a locking member (22) makes it possible to immobilize the bent bars (1, 1') in the folded position thereof.

9. A safety device according to any one of claims 1 to 8, **characterized in that** the pre-stressed system is positioned inside the fixed part of the bearing and in close proximity to the movable part of the bearing.

10. A safety device according to claim 9, **characterized in that** the pre-stressed system is a spring (20, 20') positioned about the shaft, with said spring having a first end connected to the movable part of the bearing and a second end connected to the fixed part of the bearing.

11. A safety device according to claim 10, **characterized in that** the spring is a torsion spring.

12. A safety device according to any one of claims 1 to 11, **characterized in that** the axes of the bearings are substantially parallel.

13. A safety device according to any one of claims 1 to 12, **characterized in that** it includes at least two non-return systems positioned each between the second end of each bar and a part on the structure of the vehicle in order to prevent the withdrawal of the bar when the latter is in unfolded position.

14. A safety device according to claim 13, **characterized in that** each non-return system is a ratchet system.

15. A device according to claim 14, **characterized in that** each ratchet system (9) is arranged to cooperate with teeth (10) provided on the second end of the corresponding bar.

16. A motor vehicle including at least a row of seats mounted fixedly on the floor, said vehicle being provided with a safety device in case of overturning, said device including:
- two bent bars (1, 1') each having a first and a second end, with said bars being movable between a folded position and an unfolded position in case of overturning of the vehicle with the first ends of said bars being articulated on a mounting plate;
- a pre-stressed system for unfolding the bars; and
- a locking system which maintains the bars pre-stressed and which is released by a triggering system;
**characterized in that** it includes one element of the structure of the vehicle located behind the seats, said structure element (12) transversally extending substantially horizontally, and being laterally supported at the end thereof on the frame (11) of said vehicle, said structure element including a lower part located at a certain height (h) above the floor (14) of the vehicle, and an upper part on which said mounting plate is fixedly mounted.

17. A vehicle according to claim 16, **characterized in that** the support is positioned in a transversal plane of the vehicle **characterized in that** the parts of the bars starting at said second ends are positioned, in the folded positions thereof, forwards and at a distance from the transversal plane of vehicle wherein the mounting plate is positioned.

18. A vehicle according to claim 16 or 17, **characterized in that** the structure element (12) on which the mounting plate is fixedly mounted is a beam.

19. The vehicle according to any one of claims 16 to 18, **characterized in that** the mounting plate (4) is composed of the structure element (12) of the vehicle.

20. A vehicle according to any one of claims 18 and 19, **characterized in that** said side parts of the structure of the vehicle are hollow boxes (13, 13') adapted to receive inside said part of the bars in the folded position as well as the non-return systems (8)

21. A vehicle according to claims 19 and 20, **characterized in that** the beam has two ends connected to said hollow boxes which are positioned on either side of the frame (11) of the vehicle.

22. A vehicle according to any one of claims 17 to 21, **characterized in that** each non-return system (8) includes a guiding device intended to guide the bars (1, 1') during the unfolding thereof.

23. A safety assembly intended to equip the vehicle according to any one of claims 17 to 22 **characterized in that** it includes;
- two bent bars (1, 1') each having a first and a second end, with said bars being movable between a folded position and an unfolded position, in case of overturning of the vehicle, said first ends of said bars being articulated on a mounting plate;
- a pre-stressed system for unfolding the bars;
- a locking system which maintains the bars pre-stressed and which is released by a release system;
- each of the parts of the bent bar starting from the second ends being inserted into a guide (6, 6') intended to guide the bars during the unfolding thereof, with the guide supporting a non-return system (8);
- the mounting plate being connected to the guides through the bent bars, the non-return systems of which are locked, the assembly thus forming a pre-assembled module.

24. A safety assembly according to claim 23, **characterized in that** connection elements (16, 16') connect the mounting plate (4) to the guides (6, 6').

25. A method for assembling a safety assembly according to claim 23 or 24 on a vehicle according to one of claims 17 to 22 consisting in:
- providing the systems pre-stressed, the locking system and the release system on said support in order to form the supporting unit (4);
- providing the first ends of the bars (1, 1') in the articulations of the supporting unit and positioning the bars (1, 1') in the unfolding position thereof;
- connecting the second ends of the bars (1, 1') to the guides (6, 6') by locking the non-return systems (8);
- placing the previously assembled module above said structure element (12) of the vehicle and positioning the guides (6, 6') above the side parts (13, 13') of the structure;
- lowering the pre-assembled module by inserting the guide (6, 6') into the side parts of the structure (13, 13');
- fixing the supporting unit on the structure element and the guides to the side parts of the structure;
- releasing the locking system;
- rotating the bars (1, 1') from the unfolded position to the folded position, with both ends being guided by the guides, and;
- locking the locking system.

26. An assembling method according to claim 25, **characterized in that** during the pre-assembling the safety assembly, the supporting unit (4) and the guides (6, 6') are connected by linking elements (16, 16').

## Patentansprüche

1. Sicherheitsvorrichtung für den Fall des Überschlagens eines Fahrzeugs, umfassend:
wenigstens zwei gebogene Stangen (1, 1'), wobei jede gebogene Stange ein erstes und ein zweites Ende besitzt, wobei die genannten Stangen im Fall des Überschlagens von einer eingefahrenen Position in eine ausgefahrene Position verschiebbar sind;
- ein System in Vorspannung für das Ausfahren jeder Stange;
- ein im Fall des Überschlagens des Fahrzeugs aktiviertes Auslösesystem;
- wenigstens ein Verriegelungsorgan (22, 22'), das die Vorspannung aufrechterhält und das sich dank des Auslösesystems freisetzt, das somit jede Stange aus ihrer eingefahrenen Position freisetzt;
wobei die genannte Vorrichtung **dadurch gekennzeichnet ist, dass** das erste Ende jeder Stange (1, 1') auf einer gemeinsamen zentralen Konsole (4) derart artikuliert ist, dass die genannten zwei Stangen (1, 1') sich jeweils von einer Seite der genannten Konsole ausgehend von der einen Seite der genannten Konsole und deutlich symmetrisch im Verhältnis zu einer Ebene erstrecken, wobei eine Steuervorrichtung der Verriegelung und der Freigabe jeder Stange (1, 1') auf derselben Seite der genannten Konsole (4) vorgesehen ist, wobei die genannte Artikulation dank eines Lagers realisiert ist, das einen mit der Konsole fest verbundenen festen Teil und einen fest mit dem ersten Ende der Stange verbundenen mobilen Teil umfasst, wobei die Konsole (4) dazu bestimmt ist, auf einem Strukturelement des Fahrzeugs befestigt zu werden.

2. Sicherheitsvorrichtung gemäß Anspruch 1, **dadurch gekennzeichnet, dass** der mobile Teil oder das Ende der Stangen (3, 3') ein Formelement (21, 42) umfasst, das mit dem Verriegelungsorgan (22, 22') des Verriegelungssystems derart zusammenwirkt:
- dass einerseits die gebogenen Stangen (1, 1') in ihrer eingefahrenen Position und in Vorspannung durch Eingreifen des Verriegelungsorgans mit dem Formelement festgestellt werdem,
- dass andererseits die gebogenen Stangen durch Lösen des Verrieglungsorgans des Formelements freigegeben werden.

3. Sicherheitsvorrichtung gemäß Anspruch 1 oder 2, **dadurch gekennzeichnet, dass** der mobile Teil des Lagers eine fest mit dem ersten Ende der gebogenen Stange (1, 1') verbundene Welle (18, 18') umfasst, wobei die genannte Welle gemäß einer Rotationsachse auf dem festen Teil des Lagers artikuliert ist.

4. Sicherheitsvorrichtung gemäß Anspruch 3, **dadurch gekennzeichnet, dass** das Formelement (21) eine Vertiefung oder eine Protuberanz der Welle (18, 18') ist.

5. Sicherheitsvorrichtung gemäß Anspruch 1 bis 3, **dadurch gekennzeichnet, dass** das Formelement aus Vorsprüngen (42, 42') gebildet wird, die auf den ersten Enden der Stangen (1, 1') angeordnet sind und mit dem Verriegelungsorgan (22) zusammenwirken.

6. Sicherheitsvorrichtung gemäß Anspruch 5, **dadurch gekennzeichnet, dass** die Vorsprünge (42) mit dem Verriegelungsorgan (22) mittels Wippen (43, 43') zusammenwirken, die schwenkbar auf der Konsole (4) montiert sind.

7. Sicherheitsvorrichtung gemäß Anspruch 1 bis 6, **dadurch gekennzeichnet, dass** das Verriegelungsorgan (22) mobil auf dem festen Teil des Lagers montiert ist.

8. Sicherheitsvorrichtung gemäß Anspruch 7, **dadurch gekennzeichnet, dass** ein gemeinsames Verriegelungsorgan (22) die Feststellung der gebogenen Stangen (1, 1') in ihrer eingefahrenen Position erlaubt.

9. Sicherheitsvorrichtung gemäß Anspruch 1 bis 8, **dadurch gekennzeichnet, dass** das System in Vorspannung im Innern des festen Teils des Lagers und in unmittelbarer Nähe des mobilen Teils des Lagers angeordnet ist.

10. Sicherheitsvorrichtung gemäß Anspruch 9, **dadurch gekennzeichnet, dass** das System in Vorspannung eine Feder (20, 20') ist, die um die Welle angeordnet ist, wobei die genannte Feder ein erstes, mit dem mobilen Teil des Lagers verbundenes Ende und ein zweites, mit dem festen Teil des Lagers verbundenes Ende hat.

11. Sicherheitsvorrichtung gemäß Anspruch 10, **dadurch gekennzeichnet, dass** die Feder eine Verdrehungsfeder ist.

12. Sicherheitsvorrichtung gemäß Anspruch 1 bis 11, **dadurch gekennzeichnet, dass** die Achsen der Lager deutlich parallel sind.

13. Sicherheitsvorrichtung gemäß Anspruch 1 bis 12, **dadurch gekennzeichnet, dass** sie wenigstens zwei Rückdrehsicherungssysteme umfasst, die jeweils zwischen dem zweiten Ende jeder Stange und einem Strukturteil des Fahrzeugs angeordnet sind, um den Rückzug der Stange zu verhindern, wenn diese sich in der eingefahrenen Position befindet.

14. Sicherheitsvorrichtung gemäß Anspruch 13, **dadurch gekennzeichnet, dass** jedes Rückdrehsicherungssystem ein Haltesystem ist.

15. Vorrichtung gemäß Anspruch 14, **dadurch gekennzeichnet, dass** jedes Haltesystem (9) angeordnet ist, um mit Zacken (10) zusammenzuwirken, die auf dem zweiten Ende der entsprechenden Stange geformt sind.

16. Kraftfahrzeug, das wenigstens eine Reihe von fest auf dem Boden montierten Sitzen umfasst, wobei das genannte Fahrzeug mit einer Sicherheitsstruktur für den Fall des Überschlagens ausgerüstet ist, wobei die genannte Struktur Folgendes umfasst:
- zwei gebogene Stangen (1, 1'), die jeweils ein erstes und ein zweites Ende umfassen, wobei die genannten Stangen zwischen einer eingefahrenen Position und einer ausgefahrenen Position für den Fall des Überschlagens des Fahrzeugs verschiebbar sind, wobei die ersten Enden der genannten Stangen an einer Konsole artikuliert sind;
- ein System in Vorspannung für das Ausfahren der Stangen; und
- ein Verriegelungssystem, das die Stangen in Vorspannung hält und das sich dank eines Auslösesystems freigibt;
**dadurch gekennzeichnet, dass** es ein Strukturelement des Fahrzeugs umfasst, das sich hinter den Sitzen befindet, wobei sich das genannte Strukturelement (12) transversal deutlich horizontal erstreckt und lateral an seinen Enden auf dem Fahrgestell (11) des genannten Fahrzeugs getragen wird, wobei das genannte Strukturelement einen unteren Teil umfasst, der sich in einer bestimmten Höhe (h) oberhalb des Bodens (14) des Fahrzeugs befindet, und einen oberen Teil, auf dem die genannte Konsole fest montiert ist.

17. Fahrzeug gemäß Anspruch 16, **dadurch gekennzeichnet, dass** der Träger in einer transversalen Ebene des Fahrzeugs angeordnet ist, **dadurch gekennzeichnet, dass** die Teile der Stangen, die von den genannten zweiten Enden ausgehen, sich in ihrer eingefahrenen Position nach vorn und entfernt von der transversalen Ebene des Fahrzeugs befinden, in dem die Konsole angeordnet ist.

18. Fahrzeug gemäß Anspruch 16 oder 17, **dadurch gekennzeichnet, dass** das Strukturelement (12), auf dem die Konsole fest montiert ist, ein Balken ist.

19. Fahrzeug gemäß Anspruch 16 bis 18, **dadurch gekennzeichnet, dass** die Konsole (4) durch das Strukturelement (12) des Fahrzeugs gebildet wird.

20. Fahrzeug gemäß Anspruch 18 bis 19, **dadurch gekennzeichnet, dass** die genannten lateralen Strukturteile des Fahrzeugs hohle Kassetten (13, 13') sind, die angepasst sind, um innen den genannten Teil der Stangen in eingefahrener Position sowie die Rückdrehsicherungssysteme (8) aufzunehmen.

21. Fahrzeug gemäß Anspruch 19 und 20, **dadurch gekennzeichnet, dass** der Balken zwei Enden besitzt, die mit den genannten hohlen Kassetten verbunden sind, die auf jeder Seite des Fahrgestells (11) des Fahrzeugs angeordnet sind.

22. Fahrzeug gemäß Anspruch 17 bis 21, **dadurch gekennzeichnet, dass** jedes Rückdrehsicherungssystem (8) eine Führungsvorrichtung umfasst, die zum Führen der Stangen (1, 1') bei ihrem Ausfahren bestimmt ist.

23. Sicherheitsstruktur, die zur Ausrüstung eines Fahrzeugs gemäß Anspruch 17 bis 22 bestimmt ist, **dadurch gekennzeichnet, dass** sie Folgendes umfasst:
- zwei gebogene Stangen (1, 1'), die jeweils ein erstes und ein zweites Ende umfassen, wobei die genannten Stangen zwischen einer eingefahrenen und einer ausgefahrenen Position für den Fall des Überschlagens des Fahrzeugs verschiebbar sind, wobei die ersten Enden der genannten Stangen auf einer Konsole artikuliert sind;
- ein System in Vorspannung für das Ausfahren der Stangen;
- ein Verriegelungssystem, das die Stangen in Vorspannung hält und das sich dank eines Auslösesystems freigibt;
- wobei jeder Teil der gebogenen Stange, der von den zweiten Enden ausgeht, in eine Führung (6, 6') eingefügt ist, die dazu bestimmt ist, die Stangen bei ihrem Ausfahren zu führen, wobei die Führung ein Rückdrehsicherungssystem (8) trägt;
- wobei die Platine mittels der gebogenen Stangen mit den Führungen verbunden ist, deren Rückdrehsicherungssysteme verriegelt sind, wobei die Struktur somit ein vormontiertes Modul formt.

24. Sicherheitsstruktur gemäß Anspruch 23, **dadurch gekennzeichnet, dass** Verbindungselemente (16, 16') die Konsole (4) mit den Führungen (6, 6') verbinden.

25. Montageverfahren einer Sicherheitsstruktur gemäß Anspruch 23 oder 24 auf einem Fahrzeug gemäß Anspruch 17 bis 22, das aus Folgendem besteht:
- Installieren der Systeme in Vorspannung, des Verriegelungssystems und des Auslösesystems auf dem genannten Träger, um die Trägereinehit (4) zu formen;
- Installieren der ersten Enden der Stangen (1, 1') in den Artikulationen der Trägereinheit und Platzieren der Stangen (1, 1') in ihrer ausgefahrenen Position;
- Verbinden der zweiten Enden der Stangen (1, 1') mit den Führungen (6, 6') durch Verriegelung der Rückdrehsicherungssysteme (8);
- Präsentieren des zuvor montierten Moduls oberhalb des genannten Strukturelements (12) des Fahrzeugs und Positionieren der Führungen (6, 6') oberhalb der lateralen Strukturteile (13, 13');
- Absenken des vormontierten Moduls durch Einfügen der Führungen (6, 6') in die lateralen Strukturteile (13, 13');
- Befestigen der Trägereinheit auf dem Strukturelement und der Führungen an den lateralen Strukturteilen;
- Freigeben des Verriegelungssystems;
- Schwenken der Stangen (1, 1') aus der ausgefahrenen Position in die eingefahrene Position, wobei die zwei Enden durch die Führungen geführt sind, und;
- Verriegeln des Verriegelungssystems.

26. Montageverfahren gemäß Anspruch 25, **dadurch gekennzeichnet, dass** bei der Vormontage der Sicherheitsstruktur die Trägereinheit (4) und die Führungen (6, 6') durch Verbindungselemente (16, 16') verbunden werden.
